# EUROPÄISCHE PATENTSCHRIFT

(11) **EP 1 134 151 B1**
(45) Veröffentlichungstag und Bekanntmachung des Hinweises auf die Patenterteilung: **18.10.2006**
(21) Anmeldenummer: 01106103.3
(22) Anmeldetag: 13.03.2001
(51) Int. Cl.: B62D 65/18

(54) **Verfahren zum Anheben von in einem angetriebenen Förderstrang befindlichen Unterlagen sowie Montagestrecke zur Durchführung des Verfahrens**
Method for lifting supports included in a driven transport chain and assembly chain using this method
Procédé de levage de supports inclus dans une chaîne de transport entraînée et chaîne de montage utilisant ce procédé

(30) Priorität: 14.03.2000 DE 10011799
(43) Veröffentlichungstag der Anmeldung: 19.09.2001
(73) Patentinhaber: Schaller, Helmut, 64293 Darmstadt (DE)
(72) Erfinder: Schaller, Helmut, 64293 Darmstadt (DE)
(74) Vertreter: Kewitz, Ansgar

(56) Entgegenhaltungen:
- DE-A- 3 903 518
- DE-A- 4 217 698
- US-A- 4 937 929
- US-A- 4 944 229
- US-A- 5 718 320

## Beschreibung

Die Erfindung betrifft eine horizontal verlaufende Montagestrecke.

Durch die deutsche Offenlegungsschrift DE 42 26 826 A1 ist ein Transportsystem mit Hebevorrichtung, insbesondere für Motorfahrzeuge, welches wenigstens eine Förderbandeinheit umfasst, beinhaltend ein paar Antriebsketten mit Rollen, welche eine Vielzahl von Platten und eine Hebevorrichtung zur Versetzung des durch dasselbe transportierten Motorfahrzeugs in einer Richtung senkrecht zum Förderband aufweisen, bekannt geworden, wobei die Hebeeinrichtung vordere und hintere Hebeeinheiten beinhaltet, welche jeweils den vorderen Rädern und den hinteren Rädern des Motorfahrzeugs zugeordnet sind, und wobei jede Hebeeinheit Räder beinhaltet, welche mit zueinander identischen Nocken in Eingriff tretbar sind, angebracht auf parallelen Ebenen entlang der Fortschrittsrichtung des Bandes, welche einen ersten ansteigenden Abschnitt, einen folgenden horizontalen Abschnitt und einen endabsteigenden Abschnitt aufweisen, und wobei die Nocken einen Abstand voneinander aufweisen, der dem Radstand eines Motorfahrzeugs entlang der Fortschrittsrichtung des Bandes gleich ist.

Vorzugsweise wird bereits am Fahrzeug die Räder montiert sind, um das Fahrzeug überhaupt auf der Förderbandeinheit transportieren zu können. Darüber hinaus besteht dieses Transportsystem im Wesentlichen aus zwei entsprechend der Spurbreite eines zu montierenden Fahrzeugs bewegbaren Kettenförderern, welche je für sich auch bei gemeinsamen Antrieb ein vor- und rücklaufendes Kettentrum besitzen, an welchem für jedes Fahrzeug zwei dem Radstand entsprechende Einzelaufnahmen vorgesehen sein müssen. Daraus folgt, dass für jeden Fahrzeugtyp ein anderes Transportsystem ausgewählt werden muss und zwar im Hinblick auf Spurbreite und im Hinblick auf gegenseitigen Radabstand. Weiterhin ist es bei einem derartigen Transportsystem nicht möglich aus der Förderreihe ein Fahrzeug, welches Mängel aufweist, ohne weiteres auszuschleusen. Darüber hinaus ist ein nicht unterbrochener Umgang um das einzelne Fahrzeug nicht möglich. Die Fahrzeugreihe selbst kann lediglich von den beiden Längsseiten aus bedient werden.

Durch die deutsche Patentschrift 37 16 390 C2 ist eine Montagehilfsvorrichtung zum Anbau von Kraftfahrzeugrädern aus einem höher liegenden Stapel an ein tiefer liegendes Fahrzeug, welches auf einer Montagelinie entlang geführt wird, bekannt geworden, wobei das Montagehilfsmittel durch ein Viergelenkgetriebe die Zuführung von Kraftfahrzeugrädern erleichtert.

Aus der gattungsbildenden US 4944229 A ist eine Vorrichtung bekannt, bei der ein Hubrahmen durch eine Mechanik gehoben wird, die in eine Führungsschiene unterhalb des Hubwagens greift.

Ausgehend von dem so bekannt gewordenen Stand der Technik, liegt der vorliegenden Erfindung die Aufgabe zugrunde, eine Montagestrecke zur Durchführung eines Verfahrens bei der Herstellung von Kraftfahrzeugen in Vorschlag zu bringen, bei welchem ein zu montierendes Fahrzeug während seiner Herstellung aus seiner Nulllage in eine Arbeitshöhe anhebbar ist, nach dem Anhebevorgang in einer Ebene ringsum frei zugänglich bleibt, und wobei eine Ausschleusmöglichkeit aus der Montagestrecke auch im angehobenen Zustand des Fahrzeugs ermöglicht wird.

Diese Aufgabe wird dadurch gelöst, dass von einem Antrieb kraftschlüssig mehrere hintereinander kraftschlüssig miteinander verbundene ineinander geschachtelte Unterlagenpaare horizontal angetrieben werden, dass die kraftschlüssig horizontal wirkende Kraft zusätzlich zum Anheben oder Absenken der eingeschachtelten Unterlage gegenüber der anderen dient, dass die Unterlagen des ineinander geschachtelten Paares sich gegenseitig führen und im angehobenen Zustand beide Teile des Paares gegeneinander unabhängig vom kraftschlüssigen Antrieb arretierbar sind.

Eine Ausgestaltung der erfinderischen Vorrichtung besteht darin, dass beim Absenken der jeweiligen eingeschachtelten Unterlage eines Unterlagenpaares die kraftschlüssig horizontal wirkende Kraft zunächst die gegenseitige Arretierung des Unterlagenpaares löst, und anschließend die eingeschachtelte Unterlage in ihre ursprüngliche Nulllage zum anderen Teil des Paares zurückführt. Hierdurch wird sichergestellt, dass Fehlsteuerungen, welche zwangsläufig zu einer Verzögerung des Herstellungsvorganges führen, eindeutig vermieden werden, und dass auch bei Ausfall des einen Antriebs keinerlei Hilfsantriebe Schäden am angehobenen oder dem zum Anheben vorbereiteten Fahrzeug verursachen können.

Ausgehend von einer horizontal verlaufenden Montagestrecke für eine Reihe hintereinander auf Unterlagen stehender Fahrzeuge, wobei die Unterlagen über Schienen geführt werden, und wobei die Unterlagen mit den Fahrzeugen unter Beibehaltung der horizontalen Ausrichtung gegenüber der Horizontalen angehoben werden, wird vorgeschlagen, dass eine Reihe hintereinander angeordneter kraftschlüssig miteinander verbundener in horizontaler Richtung auf Schienen bewegbarer Schubplattformen vorgesehen sind, dass ein an den Längsseiten der Schubplattformen angreifender stationärer Reibradantrieb vorgesehen ist, dass jede Schubplattform einen Grundrahmen trägt, dass in Förderrichtung links und rechts senkrecht nach oben weisende Seitenwände am Grundrahmen angeordnet sind, dass der Grundrahmen eine geschlossene umlaufende Abdeckung mit einer zentralen Mittenöffnung aufweist, dass ein die Mittenöffnung verschließender Hubtisch zur Aufnahme eines Fahrzeugs, insbesondere einer aufzubauenden Fahrzeugkarosse vorgesehen ist, dass in Förderrichtung links und rechts am Hubtisch nach unten weisende Seitenwangen vorgesehen sind, dass die Seitenwangen parallel zu den Seitenwänden innerhalb dieser verlaufen, dass die sich je Seite direkt gegenüberstehende Seitenwange und Seitenwand als Hubführungsträgerpaar 13 ausgebildet sind, und dass jede Seitenwange und jede Seitenwand in Förderrichtung im Abstand hintereinander Führungschlitze oder hintereinander Führungsbolzen als Hubführungen tragen, dass jede Seitenwand einen Ausschnitt trägt, dass jede Seitenwange an ihrer Außenseite im Bereich des Ausschnitts einen die jeweilige Seitenwand überragenden Teil einer Hubvorrichtung trägt, und dass der jeweils andere Teil der Hubvorrichtung stationär links und rechts neben der Montagestrecke angeordnet ist, und dass die Seitenwände und die Seitenwangen je Schubplattform gegeneinander arretierbar ausgebildet sind. Durch die erfinderische Kombination ineinander geschachtelter gegeneinander anhebbarer Plattformen, welche sich gegeneinander abstützen mittels einer Hubvorrichtung, die sich aus einem stationären Teil außerhalb der Schubplattform und einem auf der Schubplattform befindlichen Teil zusammensetzt, in einen beliebigen horizontalen Abstand zueinander zu bringen, wobei gleichzeitig sichergestellt ist, dass ein aufzubauendes Fahrzeug stets in horizontaler Lage verbleibt, wird erfindungsgemäß eine Montagestrecke vorgeschlagen, bei der darüber hinaus praktisch über die komplette Montagestrecke ein Zugang zu dem erfindungsgemäßen äußeren Grundrahmen jederzeit möglich ist. Darüber hinaus ist eine Begehung des Grundrahmens ringsum möglich, sodass die erfindungsgemäß über den Grundrahmen hinaus angehobene Fahrzeugkarosse von allen vier Seiten kontinuierlich aufgebaut wird, und zwar ohne Gefahr dass Kettentriebe, welche sonst für das Anheben der Fahrzeugkarosse erforderlich sind, zu Unfällen führen können. Auch wird durch die doppelte Nutzung des Reibradantriebs, welcher sowohl für eine horizontale Bewegung der ineinander geschachtelten Plattformen dient, als auch zur Anhebung der Plattformen gegeneinander, während ihres Fortschreitens die Störanfälligkeit einer derartigen Montagestrecke praktisch zu Null. In Ausgestaltung dieses Erfindungsgedankens wird gemäß den Ansprüchen vorgeschlagen, dass die Oberfläche der umlaufenden Abdeckung mit der Oberfläche des Hubtischs im nicht angehobenen Zustand fluchten. Durch diese erfinderische Ausgestaltung wird erreicht, dass auch bei freiem ineinander geschachtelten nicht angehobenem Hubtisch Stolperstellen in Wegfall kommen.

In noch weiterer Ausgestaltung des Erfindungsgegenstandes wird nach den Ansprüchen unter Schutz gestellt, dass bei Anordnung der Führungsschlitze in den Seitenwänden des Grundrahmens die Führungsbolzen im unteren Bereich des freien Endes der Seitenwangen angeordnet sind, dass die Führungsschlitze gegenüber der horizontalen Förderrichtung einen Neigungswinkel zwischen 60 Grad und 85 Grad, insbesondere zwischen 70 Grad und 80 Grad einnehmen, und dass die Führungsschlitze in ihrem oberen Endbereich einen Knick mit einem Winkel kleiner 90 Grad gegenüber dem Neigungswinkel in Förderrichtung besitzen. Durch diese erfindungsgemäße Zusammenarbeit zwischen Führungsschlitz und Führungsbolzen wird ein kontinuierliches ruckfreies Hochklettern des Hubtischs während des Fortschreitens erreicht, und nach Erreichen des größten Abstands, allein durch die Ausgestaltung der Führungsschlitze, ein Festhalten der Führungsbolzen und damit ein eindeutiges Arretieren zwischen der den Grundrahmen nach oben vorhandenen Abdeckung und dem Hubtisch erzwungen.

Eine andere Ausgestaltung des Erfindungsgegenstandes nach den Ansprüchen wird unter Schutz gestellt, die sich dadurch auszeichnet, dass bei Anordnung der Führungsschlitze in den Seitenwangen des Hubtischs die Führungsbolzen im oberen Bereich des freien Endes der Seitenwände des Grundrahmens angeordnet sind, dass die Führungsschlitze gegenüber der horizontalen Förderrichtung einen Neigungswinkel zwischen 60 Grad und 85 Grad, insbesondere zwischen 70 Grad und 80 Grad einnehmen, und dass die Führungsschlitze in ihrem unteren Endbereich einen weiteren Knick mit einem Winkel kleiner 90 Grad gegenüber dem Neigungswinkel in Förderrichtung besitzen. Durch diese Umkehrung in der Führung wird bereits durch die Abdeckung der Führungsschlitze durch die Seitenwände im Hinblick auf Verletzungsgefahr eine weitere beachtliche Sicherheit erreicht.

In noch weiterer Ausgestaltung des Erfindungsgedankens wird in den Ansprüchen unter Schutz gestellt, dass eine auf einem Zapfen drehbar angeordnete die jeweilige Seitenwand überragende Hubrolle je Außenseite der Wange als ein Teil der Hubeinrichtung angeordnet ist, und dass eine zur Horizontalen geneigte Führungsschiene vorgegebener Länge an einer Stützkonstruktion als der andere Teil der Hubvorrichtung stationär links und rechts neben der Montagestrecke angeordnet ist, und dass die Hubrollen zufolge des horizontal wirkenden Kraftschlusses in Wirkverbindung mit den Führungsschienen treten, und dass am Ende der Führungsschiene die Wirkverbindung durch Ablauf gelöst wird. Durch diese erfindungsgemäße Anordnung der Trennung der Hubeinrichtungen in einen stationären Teil außerhalb der Montagestrecke und einen mit der Plattform transportierten anderen Teil der Hubeinrichtung wird erreicht, dass lediglich im Bereich des Anhebens die Zugänglichkeit zur Montagestrecke eingeschränkt ist.

Eine andere Ausgestaltung des Erfindungsgegenstandes besteht nach Anspruch darin, dass eine je Seitenwange mit Abstand von dieser angeordnete die jeweilige Außenwand überragende gegen die Horizontale geneigte Führungsschiene vorgegebener Länge als ein Teil der Hubvorrichtung vorgesehen ist, und dass eine auf einem Zapfen drehbare Rolle an einer weiteren Stützkonstruktion stationär links und rechts neben der Montagestrecke als der andere Teil der Hubvorrichtung angeordnet ist, und dass die Führungsschienen zufolge des horizontal wirkenden Kraftschlusses in Wirkverbindung mit der Rolle treten und am Ende der Führungsschiene die Wirkverbindung gelöst wird. Eine derartige Ausgestaltung bietet sich insbesondere dann an, wenn bei sehr langen ineinander geschachtelten Hubplattformen der Hubbereich überdimensional lang würde und somit auf die freie Zugänglichkeit zur Montagestrecke eingeschränkt würde. An dieser Stelle wird darauf hingewiesen, dass während des Hubvorgangs sehr wohl Montagepersonal auf der umlaufenden Abdeckung verbleiben kann.

Gemäß den Ansprüchen wird in Ausgestaltung des Erfindungsgegenstandes vorgeschlagen, dass der Neigungswinkel der Führungsschienen oder der weiteren Führungsschienen größer 0 Grad bis 15 Grad insbesondere 5 Grad bis 10 Grad gegen die Horizontale beträgt. Hierdurch ist zum einen die Gewähr dafür gegeben, dass der Verschleiß im Bereich der Hubvorrichtung uns des Hubführungsträgerpaares 13 beim Anheben praktisch null ist.

Gemäß den Ansprüchen wird unter Schutz gestellt, dass durch Verlängerung der Führungsschienen oder der weiteren Führungsschienen oder Steigerung der Neigung bei gleicher Führungsschienenlänge die Hubhöhe variierbar wird. Durch die erfindungsgemäße Anordnung der Führungsschienen neben der Montagestrecke oder am Hubtisch ist hierbei sehr wohl eine Anpassung der Montagestrecke an zu fertigende Fahrzeuge jederzeit möglich, oder bei vorgegebener Länge der Montagestrecke eine optimale Anpassung an diese möglich.

In noch weiterer Ausgestaltung des Erfindungsgegenstandes gemäß den Ansprüchen wird vorgeschlagen, dass die stationär neben der Montagestrecke angeordneten ansteigenden Führungsschienen an ihren unteren Enden mit ihrer oberen Lauffläche gegenüber dem an den Wangen angeordneten Hubrollen in einer Ebene mindestens um den Hubrollenradius tiefer als die Hubrollenachsen angeordnet sind, dass die Führungsschienen an ihrem oberen Endbereich in ein horizontal verlaufendes Schienenstück übergehen, und dass am Ende der horizontalen Erstreckung die Führungsschienen ein kurzes Stück bis zu ihrem Ende unter einem bestimmten Winkel nach unten abweichend von der Horizontalen verlaufen. Durch diese erfinderische Ausgestaltung wird sichergestellt, dass ein ruckfreies Aufnehmen der Hubrollen von den Führungsschienen während des kraftschlüssigen Antriebs erfolgt, anschließend eine mit gleich bleibender Geschwindigkeit durchgeführte Anhebung erfolgt und am Ende nach Erreichen der vorgesehenen Hubhöhe während eines Zeitraumes die Möglichkeit besteht Arretiermaßnahmen zwischen Tisch und Grundrahmen vorzusehen, oder durch Absenken der Führungsrollen diese in einen Haltebereich der Führungsschlitze zu verbringen und somit ohne weitere Arretiervorrichtungen ein gegenseitiges Arretieren der Hubplattform und des Grundrahmens zu gewährleisten.

Eine weitere erfinderische Ausgestaltung zeichnet sich dadurch aus, dass je eine weitere gleichartige Führungsschiene oberhalb der ansteigenden Führungsschiene angeordnet ist, sodass je Seite der Montagestrecke ein Schienenpaar einen Hubrollenführungskanal bildet. Zufolge der erfindungsgemäßen Bildung eines Hubrollenführungskanals wird ein Abheben der Führungsrollen oder ein Schwenken oder ein Drehen des Hubtischs gegenüber der Horizontalen eindeutig vermieden.

Weiterhin wird in einer weiteren Ausgestaltung der an den Wangen angeordneten Schienen vorgeschlagen, bei dem die an den Seitenwangen links und rechts angeordneten ansteigenden weiteren Schienen an ihrem oberen Ende mit ihrer unteren Lauffläche gegenüber den stationär neben der Montagestrecke angeordneten weiteren Hubrollen in einer Ebene mindestens um den weitern Hubrollenradius höher als die weiteren Hubrollenachsen angeordnet sind, dass die weiteren Führungsschienen in ihrem unteren Endbereich in ein horizontal verlaufendes weiteres Schienenstück übergehen, und dass am Ende der horizontalen Erstreckung die weiteren Führungsschienen in ein weiteres kurzes Stück bis zu ihrem Ende unter einem bestimmten Winkel nach oben abweichend von der Horizontalen verlaufen. Durch diese erfindungsgemäße Ausgestaltung der weiteren Führungsschienen wird auch hier erreicht, dass die Führungsbolzen in eine sichere Halterung in an den Seitenwangen oder an den Seitenwänden angeordneten weitergeführten Führungsschlitzen eingeführt werden.

In einer weiteren Ausgestaltung wird vorgeschlagen, dass je eine noch weitere gleichartige Führungsschiene unterhalb der ansteigenden weiteren Führungsschiene angeordnet ist, und dass je Seitenwange ein Schienenpaar einen Rollenführungskanal bildet. Hierdurch wird ebenfalls eine eindeutige und sichere Führung des Hubtisches während des Anhebens gewährleistet.

In noch weiterer Ausgestaltung des Erfindungsgegenstandes wird unter Schutz gestellt, dass Abstand zur Hubrolle und hinter dieser eine Hilfsstützrolle je Seitewange vorgesehen ist, und dass je eine hiermit zusammenwirkende stationär links und rechts der Montagestrecke angeordnete Stützschiene vorgesehen ist, und dass die Stützschiene in einer senkrechten Ebene links und rechts außerhalb der Schienenebene verläuft. Durch den erfindungsgemäßen Einsatz einer Hilfsstützrolle wird insbesondere beim Mitfahren von Montagepersonal auch während des Hubvorgangs eine Horizontalführung des Hubtischs unterstützt, sodass ein Abkippen des Hubtischs aus der Horizontalen nicht möglich ist.

In noch weiterer Ausgestaltung des Erfindungsgegenstandes wird gemäß den Ansprüchen unter Schutz gestellt, dass eine um den Zapfen jeder Hubrolle drehbare Arretierung mit einer an ihrem einen Ende angeordneten Abstandsrolle vorgesehen ist, dass die Abstandsrolle je Seite auf der entsprechenden Oberkante der Seitenwand beim Hubvorgang abrollt, und dass bei Erreichen der vorgesehenen Hubhöhe zwischen Hubtisch und Abdeckung die Abstandsrolle in der Oberfläche der entsprechenden Seitenwand festgehalten wird. Durch das erfindungsgemäße Abrollen auf der Oberkante der Seitenwand wird bei Erreichen der Hubhöhe die Hubrolle in eine Vertiefung der Oberfläche der Seitenwand einfallen, und hiermit eine eindeutige Arretierung zwischen Grundrahmen und Hubplattform bewirken. Die Führungsbolzen selbst halten hierbei die Hubplattform in einer horizontalen Lage ohne jedoch die Arretierfunktion gegenüber dem Grundrahmen übernehmen zu müssen.

In noch weiterer Ausgestaltung des Erfindungsgegenstandes wird gemäß den Ansprüchen vorgeschlagen, dass in jeder Seitenwand je Seite zwei federbelastete horizontal verlaufende hintereinander angeordnete Platten vorgesehen sind, und dass nach Erreichen der vorgesehenen Hubhöhe die Platten die entsprechende Seitenwange abstützen. Auch bei dieser erfindungsgemäßen Ausgestaltung einer Arretierung wird eine sicher Halterung des Hubtischs im angehobenen Zustand ermöglicht. Um die Platten sicher zu positionieren, läuft in diesem Falle die Hubrolle über den horizontalen Teil der Schiene bzw. der horizontale Teil der Schiene wird von der weiteren Hubrolle getragen. Nachdem es sich hierbei bevorzugt um Platten mit Federvorspannung handelt, lassen sich beim Absenken der fertigen Karosse auf das Nullniveau die Platten zurückziehen.

In der nachfolgenden Beschreibung wird die Erfindung anhand von in einer Zeichnung schematisch dargestellten Ausführungsbeispielen näher erläutert.
Es zeigen:
Figur 1 eine Draufsicht auf eine horizontal verlaufende erfindungsgemäße Montagestrecke;
Figur 2 eine Seitenansicht einer ineinander geschachtelten Schubplattform mit Grundrahmen und Hubtisch, mit teilweise weggebrochener Grundrahmenwand;
Figur 3 einen Teilschnitt eines gegenüber dem Grundrahmen angehobenen Hubtischs mit Hubrolle und stationärer Führungsschiene neben der Montagestrecke;
Figur 4 einen Teilschnitt eines gegenüber dem Grundrahmen angehobenen Hubtischs mit weiterer Führungsschiene und stationärer Rolle neben der Montagestrecke;
Figur 5 einen Schnitt gemäß A-A in Figur 1, durch eine Schubplattform;
Figur 6 einen Ausschnitt aus einer Seitenwange mit einer Stützrolle
Figur 7 eine Arretiervorrichtung im vergrößerten Maßstab.

In der nachfolgenden Beschreibung werden gleiche Bauteile mit denselben Bezugsziffern bezeichnet.

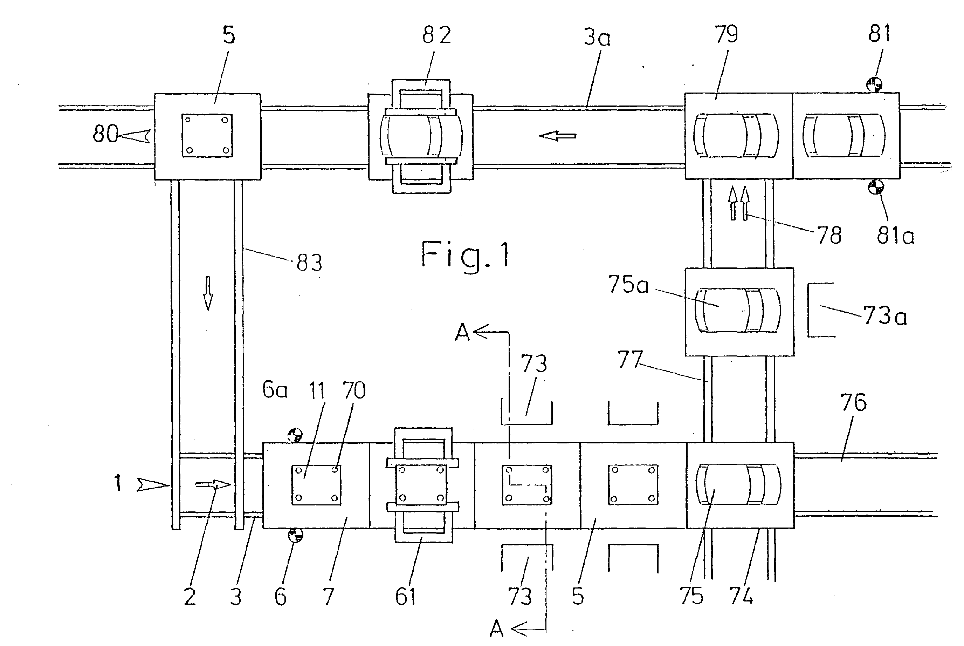

Gemäß Figur 1 besteht eine Montagestrecke 1 aus einer Reihe kraftschlüssig aneinander anschließender Schubplattformen 5, welche von einem Reibradantrieb 6 kraftschlüssig angetrieben werden.

Durch den Reibradantrieb 6 werden die Schubplattformen 5 gemäß Pfeil 2 von links nach rechts über Schienen 3 weiterbewegt, und erreichen eine Hubvorrichtung 61, welche links und rechts neben den Schubplattformen 5 außerhalb der Schienen 3 am Montageflur angeordnet ist. An dieser Stelle werden die jeweiligen Schubplattformen 5, welche je aus einem Grundrahmen 7 und einem Hubtisch 11 bestehen, wie in den weiteren Figuren näher erläutert, durch Anheben voneinander gelöst. Anschließend an die Hubvorrichtung 61 werden die aus Grundrahmen 7 und angehobener Hubtisch 11 bestehenden Schubplattform 5 arretiert ineinander geschachtelt entlang der Montagestrecke 1 durch kraftschlüssige Verbindung weiter transportiert.

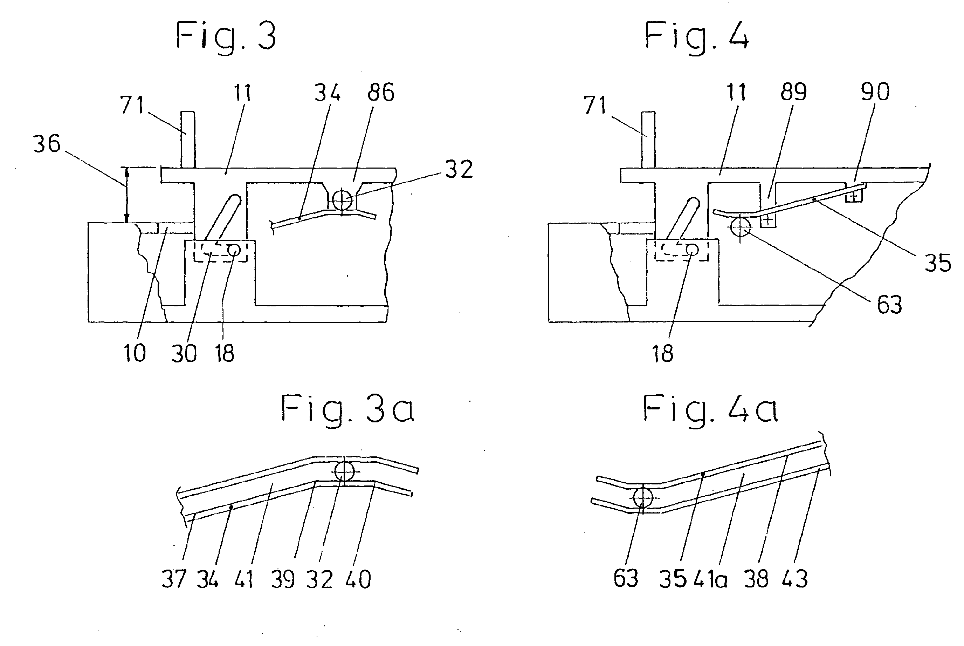

Der Grundrahmen 7 besitzt eine geschlossen umlaufende Abdeckung 9 mit einer zentralen Mittenöffnung 10 (vergleiche Figur 3), welche vom Hubtisch 11 zunächst abgedeckt ist. Der Hubtisch 11 besitzt an seiner Oberfläche Stützenhalterungen 70, in welche, wie in Figur 3 und 4 dargestellt, Stützen 71 eingebracht werden können, um hierauf beispielsweise einen nicht dargestellten Rahmen einer Karosserie zu verankern, welcher im Verlauf der Montagestrecke 1 zu einem Fahrzeug aufgebaut wird.

Wie aus Figur 1 eindeutig ersichtlich, ist das aufzubauende Fahrzeug, welches auf dem Hubtisch 11 ruht, ringsum über die begehbare geschlossen umlaufende Abdeckung 9 zugänglich, sodass neben der Montagestrecke 1 vorhandene Magazine 73, welche Montageteile bereithalten, von den Monteuren jederzeit genutzt werden können, beispielsweise in einem Magazin 73 vorhandene Kotflügel insgesamt entnommen werden können und von dem hierfür zuständigen Monteur während des Fortschreitens der Montagestrecke an den entsprechenden vier Stellen des Fahrzeugs angebracht werden können, ohne dass der Monteur die Schubplattform verlassen muss.

Es wird angenommen, dass an einer ersten Kreuzungsstelle 74 ein Fahrzeug 75 soweit fertig gestellt ist, dass es über nicht näher bezeichnete Abführorgane 76, beispielsweise Förderbänder, aus der Montagestrecke 1 entlassen werden kann, um weiter konfektioniert zu werden.

Im Falle einer hohen Durchsatzleistung und auch im Falle nachzuarbeitender Fahrzeuge schließt sich an die erste Kreuzungsstelle 74 ein weiterer Förderer 77 an, der sich rechtwinklig zur Montagestrecke 1 erstreckt. Bei diesem weiteren Förderer 77 kann es sich um einen Gummiriemenförderer handeln, welcher die einzelne aus dem Verband herausgenommene Schubplattform 5 an ihrer Unterseite ergreift, durch eine nicht dargestellte Hubvorrichtung aus den Schienen 3 aushebt und unter Beibehaltung der ursprünglichen Richtung der Schubplattform das an einer anderen Stelle abzuliefernde oder rückzubringende weitere Fahrzeug 75a entsprechend einem Doppelpfeil 78 einer weiteren Kreuzungsstelle 79 zuführt.

An der weiteren Kreuzungsstelle 79 wird der weitere Förderer 77 von'einer weiteren Montagestrecke 80 gekreuzt, welcher ebenfalls einen weiteren Reibradantrieb 81 besitzt.

Im Falle einer zusätzlichen Montageleistung auf dem weiteren Förderer 77, beispielsweise dem Einbau eines Orientierungssystems in das weitere Fahrzeug 75a aus einem weiteren Magazin 73a, fährt der Monteur auf der umlaufenden Abdeckung 9 an dem weiteren Magazin 73 vorbei und kann dort das entsprechende Zusatzbauteil entnehmen und bis zum Kreuzungspunkt 79 in das Fahrzeug 75a eingebaut haben. Ein derart komplettiertes Fahrzeug 75a wird nunmehr auf dem Hubtisch 11 befindlich mit seinem Grundrahmen 9 kraftschlüssig in eine Reihe von Schubplattformen 5 aufgenommen, beispielsweise durch einen Stop and Go Vorgang, wobei der weitere Förderer 77 wegtaucht und die Schubplattform 5 mit dem Fahrzeug 75a auf das weitere Schienenpaar 3a absetzt. Zufolge des kraftschlüssigen Antriebs der Schubplattform 5 erreicht das weitere Fahrzeug 75a eine Senkstation 82 und wird dort erfindungsgemäß über den nunmehr entgegengesetzt verlaufenden Vorgang, wobei das Fahrzeug seine ursprüngliche Ausrichtung beibehalten hat wie zur Hubstation 61 beschrieben durch Einfahren des Hubtischs 11 auf die Schubplattform 5 abgesetzt, und kann von dieser anschließend, nachdem der Hubtisch 11 mit der Abdeckung 9 des Grundrahmens fluchtend eingefahren ist, durch eigene Kraft von der weiteren Montagestrecke 80 über beispielsweise eine nicht dargestellte Rampe mit eigener Kraft Endmontagebändern zugeführt werden. Eine so frei gewordene Schubplattform 5 wird nunmehr bevorzugt über einen Rückführförderer 83 an den Anfang der Montagestrecke 1 verbracht, um von dort im Kreislauf für die Montage von Fahrzeugen erneut eingesetzt zu werden.

Wie der Figur 1 zu entnehmen ist, besteht dort sowohl die gesamte Hubvorrichtung 61 als auch die gesamte Senkstation 82 aus zwei Bauteilen, die stationär links und rechts neben der Montagestrecke 1 angeordnet sind, und die mit an den Seitenwangen des Hubtischs 11 angeordneten Teilen zusammenwirken. In derselben Weise besitzt auch der Grundrahmen 7 der Schubplattform 5, an welchem die Reibradantriebe 6 und 6a links und rechts angreifen zwei Seitenwände.

Zur Vereinfachung bezieht sich die nachfolgende Beschreibung nur auf eine Seitenwand 8 des Grundrahmens 7 bzw. eine Seitenwange 12 des Hubtischs 11; dies ist dadurch gerechtfertigt, da die Schubplattformen 5 mit dem im Grundrahmen 7 eingeschachtelten Hubtisch 11 symmetrisch zur Förderrichtungslängsachse ausgebildet sind.

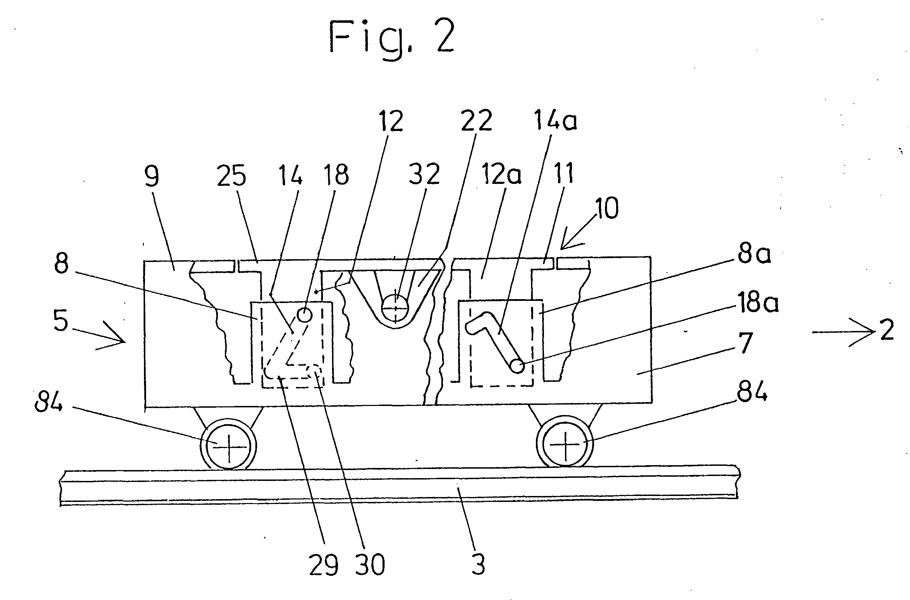

Die Seitenansicht einer ineinander geschachtelten Schubplattform mit Grundrahmen 7 und Hubtisch 11 mitteilweise weggebrochenem Grundrahmen gemäß Figur 2 stellt die Schubplattform 5 im Ruhezustand dar. Hierbei fluchtet die Oberfläche 25 des Hubtischs 11 mit der geschlossen umlaufenden Abdeckung 9 des Grundrahmens 7. Der Außenrand des Hubtischs 11 schließt die in der Schubplattform 5 enthaltene zentrale Mittenöffnung 10.

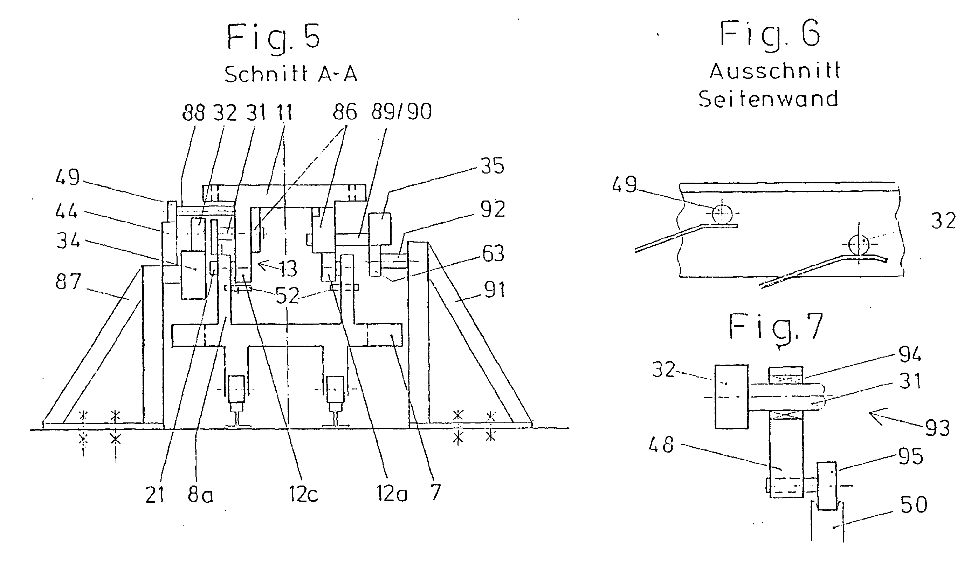

Die Schubplattform 5 wird über vier Laufräder 84, welche als Bundrollen ausgeführt sind, über das Schienenpaar 3 bzw. 3a geführt. Mit dem Boden des Grundrahmens 7 sind auf der linken und auf der rechten Seite der Schubplattform 5 je zwei Seitenwände 8, 8a hintereinander angeordnet. Diesen stehen je zwei pro Seite sich nach unten erstreckenden Seitenwangen 12,12a gegenüber, die mit dem Hubtisch 11 verbunden sind (vergleiche hierzu auch Figur 5).

Im Ausführungsbeispiel gemäß Figur 2 trägt die der Seitenwand 8 direkt gegenüberstehende Seitenwange 12 einen Führungsschlitz 14, während die Seitenwand 8 einen Führungsbolzen 18 trägt, welcher im Führungsschlitz 14, bei Anheben des Tischs mittels Rollbewegung einer Hubrolle 32 auf einer schräg zur Horizontalen verlaufenden Führungsschiene 34 (vergleiche Figur 3), geführt wird. Es wird darauf hingewiesen, dass links und rechts an den Seitenwangen 12 je eine Führungsrolle 32 und je eine Führungsschiene stationär an einer Stützkonstruktion direkt neben der Montagestrecke 1 vorgesehen ist.

Im Falle, dass die Wange 12 mit dem Führungsschlitz 14 versehen wird, sind alle vier Seitenwangen 12, 12a ebenfalls mit demselben Führungsschlitz 14, zu versehen, und die Seitenwände 8,8a, mit Führungsbolzen 18, 21 um ein Anheben des Hubtischs gegenüber dem Grundrahmen 7 zu ermöglichen.

Im Ausführungsbeispiel gemäß Figur 2 ist auch eine andere Konfiguration weiterer Führungsschlitze 14a dargestellt, wobei gemäß Figur 2 nur der weitere Führungsschlitz 14a dargestellt ist. In diesem Falle wirken mit den weiteren Führungsschlitzen 14a, weitere Führungsbolzen 18a, zusammen, wovon in Figur 2 nur der weitere Führungsbolzen 18a dargestellt ist, um ein eindeutiges Anheben des Tischs mittels der beiden Hubrollen 32 zu gewährleisten.

Falls die Seitenwände 8,8a zu einer einzigen Seitenwand links und rechts des Grundrahmens 7 zusammengefasst sind, ist dafür Sorge zu tragen, dass die jeweilige Seitenwand einen Ausschnitt 22 besitzt, durch welche die Hubrollen 32 als jeweils ein Teil der jeweiligen Hubvorrichtung 61 mit der jeweiligen Führungsschiene 34 als der jeweils andere Teil der jeweiligen Hubvorrichtung 61 in Wirkverbindung treten kann.

Die Führungsschlitze 14 tragen im unteren Endbereich 29 einen weiteren Knick 30, welcher gegenüber dem Neigungswinkel des Führungsschlitzes 14 in Förderrichtung, welche im Wesentlichen zwischen 60 Grad und 85 Grad liegt, einen Winkel von kleiner 90 Grad einschließen. Hierdurch werden die Führungsbolzen 18 im angehobenen Zustand des Hubtischs 11 zufolge der weiteren Bewegung des Grundrahmens, nach dem die Führungsbolzen an den Seitenwänden 8, 8a, des Grundrahmens 7 verankert sind, soweit in den weiteren Knick 30 eingeführt bis sie am Ende des weiteren Knicks 30 durch ihre Lage dafür sorgen, dass nunmehr der Hubtisch 11 arretiert mit dem Grundrahmen 7 kontinuierlich weiter transportiert wird.

In äquivalenter Weise verhält es sich mit dem weiteren Führungsschlitz 14a und dem weiteren Führungsbolzen 18a. Dort wird ebenfalls nach Erreichen der maximalen Hubhöhe durch Weitertransport des Grundrahmens 7 in Richtung des Pfeils 2 der Führungsbolzen 18a in eine Ruhelage einfallen und somit einen sicheren Weitertransport der ineinander geschachtelten Schubplattform in angehobenem Zustand gewährleisten.

Figur 3 zeigt in einem Teilschnitt einen gegenüber dem Grundrahmen 7 angehobenen Hubtisch 11 mit der Hubrolle 32 und der hiermit zusammen wirkenden stationären Führungsschiene 34. Die Länge der Führungsschienen 34 ist dabei so ausgelegt, dass die Hubrolle 32 links und rechts des Hubtischs entsprechend einer Führungsschienenneigung (vergl. Figur 3a), welche einen Winkelbereich von 2 Grad bis 10 Grad zur Horizontalen besitzt, innerhalb der Länge einer Schubplattform sicher eine erforderliche Hubhöhe 36 erreicht, um an der auf Stützen 71 stehenden Karosse Arbeiten durch einen Monteur im Stehen durchführen zu können. Auch ist ein sicheres Einhalten dieser Hubhöhe 36 wesentlich, beispielsweise für das Einstellen von Robotern für das Anbringen von Türen an Karossen oder das Einsetzen von Fenstern bei der Fertigstellung eines Fahrzeugs.

Beim Anheben des Hubtischs 11 bewegt sich die Hubrolle 32 auf einer oberen Lauffläche 37 der Führungsschiene 34 entlang, bis diese ein horizontales Führungsstück 39 erreicht hat. Während des Laufs der Hubrolle auf dem horizontalen Führungsstück wird der Führungsbolzen 18 im weiteren Knick 30 entlang geführt, und wird anschließend, wenn die Hubrolle 32 über ein kurzes Stück 40, welche von der Horizontalen in einer Neigung abweicht, in eine Halterung am Ende des weiteren Knicks 30 eingepresst. Vorzugsweise ist diese Halterung federbelastet, sodass während des Senkvorgangs in der Senkstation 82 ein Lösen des Führungsbolzens 18 zufolge Anstiegs der Hubrolle über das kurze Stück 40 erleichtert wird. Die Führungsschiene 34 gemäß Figur 3 und Figur 3a ist Bestandteil des stationären Teils der Hubvorrichtung 61 und ist an der stationären Stützkonstruktion 87 befestigt.

In Figur 4 wird in äquivalenter Weise ein Anheben und Absenken eines Hubtischs 11 dargestellt, bei welchem eine Rolle 63 als stationäres Element als Teil der Hubvorrichtung 61 außerhalb der Montagestrecke 1 angeordnet ist, und wobei die weitere Führungsschiene 35 an Wange an einer weiteren stationären Stützkonstruktion 91 mit der Schubplattform 5 bewegt wird und somit durch eine Relativbewegung zwischen Schubplattform und der stationär angeordneten drehbaren Rolle 63 ein Anheben des Hubtischs 11 ermöglicht wird. Der Unterschied zwischen den beiden Hubvorgängen besteht darin, dass der stationäre Teil der Hubvorrichtung 61 kleiner ausgebildet werden kann, wenn dort eine Rolle 63 vorgesehen ist; jedoch ist entsprechend der Länge der Schubplattformen einer derartig äquivalenten Ausführungsform eine Grenze gesetzt.

Im Falle des Anhebens des Hubtischs 11 über die am Hubtisch 11 angeordnete weitere Führungsschiene 35 rollt die Rolle 63 an einer unteren Lauffläche 38 der weiteren Führungsschiene 35 ab. Durch Vorsehen einer weiteren gleichartigen Führungsschiene 43 unterhalb der weiteren Führungsschiene 35 wird ein Hubrollenführungskanal 41a geschaffen, der dem Hubrollenführungskanal 41 gemäß Figur 3a entspricht.

Auch in Figur 4 und 4a besitzen die weitere Führungsschiene 35 und die weitere gleichartige Führungsschiene 43 Horizontalschienenbereiche, mit welchen die Führungsbolzen 18 bzw. die weiteren Führungsbolzen 18a arretiert im unteren bzw. im oberen Endstück der Führungsschlitze 14 bzw. der weiteren Führungsschlitze 14a festgelegt werden können.

Figur 5 zeigt einen Schnitt in Richtung A-A gemäß Figur 1 durch eine Schubplattform 5 bei vom Grundrahmen 7 abgehobenen Hubtisch 11.

Im linken Bereich dieser Figur ist ein Führungsbolzen 18 dargestellt, welcher mit dem nicht sichtbaren Schlitz 14 in der Seitenwange 12 zusammen mit der Seitenwand 8c ein Hubführungsträgerpaar 13 bildet. Mit einer Konsole 86 (vergleiche auch Figur 3) ist die Hubrolle 32 über einen Zapfen 31 verbunden, und tritt in Wirkverbindung mit der als schiefe Ebene ausgebildeten Führungsschiene 34, welche über eine Stützkonstruktion 87 neben der Montagestrecke 1 mit dem Fußboden verbunden ist.

Gleichzeitig ist an der Außenwand der Seitenwange 12 ein Schaft 88 vorgesehen, welcher mit einer Stützschiene 44 über eine Abstützrolle 49 zusammenwirkt. Die Stützschiene 44 ist ebenfalls an der Stützkonstruktion 87 angeordnet.

Durch die hintereinander Anordnung von Hubrolle 32 und Abstandsrolle 49 ist beim Hub- und Senkvorgang sichergestellt, dass die horizontale Lage des Hubtischs 11, welcher beispielsweise die Karosse oder das komplette Fahrzeug trägt, sicher eingehalten wird.

Auf der rechten Seite gemäß Figur 5 ist eine Hubanordnung dargestellt, bei welcher die weitere Führungsschiene 35 an der Seitenwange 12a bzw. an der Konsole 86 angeordnet ist, und zwar über Abstandshalter 89, 90 bzw. unterhalb des Hubtischs 11 (vergleiche hierzu auch Figur 4). Die zur Hubvorrichtung gehörende Rolle 63 ist über einen weiteren Zapfen 92 mit einer weiteren Stützkonstruktion 91, welche ebenfalls neben der Montagestrecke fest verankert ist, verbunden, und tritt für das Anheben und Absenken als stationärer drehbarer Teil mit der weiteren Führungsschiene 35 in Wirkverbindung.

In Figur 7 wird im vergrößertem Maßstab eine Arretiervorrichtung 93 dargestellt, welche um den Zapfen 31 der Hubrolle 32 über ein Lager 94 drehbar gelagert ist, und wobei die Arretierung 48 in ihrem unteren Endbereich eine Arretierrolle 95 trägt. Diese Arretierrolle 95 liegt auf der Oberkante 50 jeder Seitenwand 8a, b, c, und d auf, und folgt der relativen Nachuntenbewegung der jeweiligen Seitenwand des Grundrahmens 7. Bei Erreichen des maximalen Abstands, also senkrecht unterhalb des Zapfens 31, kommt die Rolle in einer Vertiefung zur Ruhe und arretiert somit zwangsläufig die durch den Hub eingenommene Lage zwischen Hubtisch und Grundrahmen. Hierdurch werden die Arretierstellen in den Knicken der Führungsschlitze 14 oder der weiteren Führungsschlitze 14a unterstützt bzw. können bei Vorsehen von vier derartigen Arretierungen 48 in Wegfall kommen.

Werden federbelastete Platten 52 (vergleiche Figur 5) in den Wänden 8a des Grundrahmens vorgesehen und an die horizontale Lage der Führungsschienen 34 bzw. der weiteren Führungsschienen 35 angepasst, können diese Platten 52 während des horizontalen Laufs der Hubrollen 32 bzw. der Rollen 63 unter die ausgefahrenen Seitenwangen 12, 12a des Hubtischs geschoben werden.

## Patentansprüche

1. Horizontal verlaufende Montagestrecke (1) mit einer Reihe von beweglichen Unterlagen, wobei die Unterlagen jeweils als Schubplattform (5) mit einem Grundrahmen (7) und einem Hubtisch (11) ausgebildet sind und mit Mitteln versehen sind, die eine Anhebung des Hubtischs (11) durch den horizontalen Antrieb erlauben, **dadurch gekennzeichnet, dass** die Mittel als Hubvorrichtung (61) ausgebildet sind, deren erster Teil in Förderrichtung links und rechts am Hubtisch vorhanden ist, und deren anderer Teil stationär links und rechts der Montagestrecke angeordnet und mit dem ersten Teil in Wirkverbindung bringbar ist und dass Führungsbolzen (18) und Führungsschlitze (14) vorhanden sind, die den Hubtisch (11) gegenüber dem Grundrahmen (7) führen und unabhängig vom Antrieb im angehobenen Zustand arretieren.

2. Horizontal Verlaufende Montagestrecke nach dem vorhergehenden Anspruch, **dadurch gekennzeichnet, dass** die Unterlagen so ausgebildet sind, dass Fahrzeuge (4) auf ihnen abstellbar sind, wobei die Unterlagen über Schienen (3) geführt werden und wobei die Unterlagen (5) mit den Fahrzeugen (4) unter Beibehaltung der horizontalen Ausrichtung gegenüber der Horizontalen angehoben werden,
und/oder
dass an den Längsseiten der Schubplattformen angreifender stationärer Reibradantrieb (6) vorgesehen ist,
und/oder
dass in Förderrichtung links und rechts am Hubtisch (11) nach unten weisende Seitenwangen (12) vorgesehen sind, dass die Seitenwangen (12) parallel zu den Seitenwänden (8) innerhalb dieser verlaufen, dass die sich je Seite direkt gegenüberstehende Seitenwange (8) und Seitenwand (9) als Hubführungsträgerpaar (13) ausgebildet sind, dass jede Seitenwange (12) und jede Seitenwand (8) in Förderrichtung im Abstand hintereinander Führungsschlitze (14) oder hintereinander Führungsbolzen (18) als Hubführungen tragen, dass jede Seitenwand (8) einen Ausschnitt (22) trägt, dass jede Seitenwange (12) an ihrer Außenseite im Bereich des Ausschnitts (22) einen die jeweilige Seitenwand (8) überragenden Teil einer Hubvorrichtung (61) trägt, und dass der andere Teil der Hubvorrichtung (61) stationär links und rechts neben der Montagestrecke (1) angeordnet ist, und dass die Seitenwände (8) und die Seitenwangen (12) je Schubplattform (5) gegeneinander arretierbar ausgebildet sind.

3. Montagestrecke nach Anspruch 2 **dadurch gekennzeichnet, dass** bei Anordnung der Führungsschlitze (14a) in den Seitenwänden (8) des Grundrahmens (7) die Führungsbolzen (18) im unteren Bereich des freien Endes der Seitenwangen (12) angeordnet sind, dass die Führungsschlitze (14) in ihrem oberen Endbereich einen Knick besitzen
oder
dass bei Anordnung der Führungsschlitze (14) in den Seitenwangen (12) des Hubtischs (11) die Führungsbolzen (18a) im oberen Bereich des freien Endes der Seitenwände (8) des Grundrahmens (7) angeordnet sind, dass die Führungsschlitze (14) gegenüber der horizontalen Förderrichtung einen Neigungswinkel einnehmen, und dass die Führungsschlitze (14) in ihrem unteren Endbereich (29) einen weiteren Knick (30) in Fortschrittsrichtung besitzen.

4. Montagestrecke nach einem oder mehreren der vorhergehenden Montagestreckenansprüche **dadurch gekennzeichnet, dass** eine auf einem Zapfen (31) drehbar angeordnete Hubrolle je Außenseite der Wange als ein Teil der Hubvorrichtung (61) angeordnet ist, und dass eine zur Horizontalen geneigte Führungsschiene (34) vorgegebener Länge an einer Stützkonstruktion (87) als der andere Teil der Hubvorrichtung (61) stationär links und rechts neben der Montagestrecke (1) angeordnet ist, und dass die Hubrollen (32) je Hubtisch (11) links und rechts an dessen Seitenwangen (12) zufolge des horizontal wirkenden Kraftschlusses in Wirkverbindung mit den Führungsschienen (34) treten, und dass am Ende der Führungsschienen (34) die Wirkverbindung durch Ablauf gelöst wird.

5. Montagestrecke nach einem oder mehreren der Ansprüche 1-3 **dadurch gekennzeichnet, dass** eine je Seitenwange (12) mit Abstand von dieser angeordnete weitere Führungsschiene (35) vorgegebener Länge als ein Teil der Hubvorrichtung (61) vorgesehen ist, und dass eine auf einem weiteren Zapfen drehbare Rolle (63) an einer weiteren Stützkonstruktion (91) stationär links und rechts neben der Montagestrecke (1) als der andere Teil der Hubvorrichtung (61) angeordnet ist, und dass die weiteren Führungsschienen (35) zufolge des horizontal wirkenden Kraftschlusses in Wirkverbindung mit der Rolle (63) treten und am Ende der weiteren Führungsschienen (35) die Wirkverbindung gelöst wird.

6. Montagestrecke nach einem oder mehreren der Montagestreckenansprüche 4 und 5, **dadurch gekennzeichnet, dass** durch Verlängerung der Führungsschienen (34) oder der weiteren Führungsschienen (35) oder Steigerung der Neigung bei gleicher Schienenlänge die Hubhöhe (36) variierbar ist.

7. Montagestrecke nach einem oder mehreren der Montagestreckenansprüche 4 bis 6, **dadurch gekennzeichnet, dass** die stationär neben der Montagestrecke (1) angeordnete ansteigende Führungsschienen (34) an ihren unteren Enden mit ihrer oberen Lauffläche (37) gegenüber den an den Seitenwangen (12) angeordneten Hubrollen (32) in einer Ebene mindestens um den Hubrollenradius tiefer als die Hubrollenachsen angeordnet sind, dass die Führungsschienen (34) in ihrem oberen Endbereich in ein horizontal verlaufendes Schienenstück (39) übergehen, und dass am Ende der horizontalen Erstreckung die Führungsschienen (34) ein kurzes Stück (40) bis zu ihrem Ende unter einem bestimmten Winkel nach unten abweichend von der Horizontalen verlaufen.

8. Montagestrecke nach einem oder mehreren der Montagestreckenansprüche 4 bis 7, **dadurch gekennzeichnet, dass** je eine weitere gleichartige Führungsschiene oberhalb der ansteigenden Führungsschiene (34) angeordnet ist, sodass je Seite der Montagestrecke (1) ein Schienenpaar einen Hubrollenführungskanal (41) bildet.

9. Montagestrecke nach einem oder mehreren der Montagestreckenansprüche 2 bis 7, **dadurch gekennzeichnet, dass** die an den Seitenwangen (12) links und rechts angeordneten, ansteigenden weiteren Führungsschienen (35) an ihren oberen Enden mit ihrer unteren Lauffläche (38) gegenüber den stationär neben der Montagestrecke angeordneten weiteren Hubrollen (63) in einer Ebene mindestens um den weiteren Hubrollenradius höher als die weiteren Rollenachsen angeordnet sind, dass die weiteren Führungsschienen (35) in ihrem unteren Endbereich in ein horizontal verlaufendes weiteres Schienenstück übergehen, und dass am Ende der horizontalen Erstreckung die weiteren Führungsschienen (35) in ein weiteres kurzes Stück bis zu ihrem Ende unter einem bestimmten Winkel nach oben, abweichend von der Horizontalen, verlaufen.

10. Montagestrecke nach dem vorhergehenden Montagestreckenanspruch, **dadurch gekennzeichnet, dass** je eine noch weitere gleichartige Führungsschiene (43) unterhalb der ansteigenden weiteren Führungsschiene (35) angeordnet ist, und dass je Seitenwange ein Schienenpaar einen Rollenführungskanal bildet.

11. Montagestrecke nach einem oder mehreren der Montagestreckenansprüche 2 bis 10, **dadurch gekennzeichnet, dass** im Abstand zur Hubrolle (32) und hinter dieser eine Hilfsstützrolle je Seitenwange (12) vorgesehen ist, und dass je eine hiermit zusammenwirkende stationär links und rechts der Montagestrecke angeordnete Stützschiene (44) vorgesehen ist, und dass die Stützschiene (44) in einer senkrechten Ebene links und rechts außerhalb der Führungsschienenebene (34) verläuft.

12. Montagestrecke nach einem oder mehreren der Montagestreckenansprüche 2 bis 11, **dadurch gekennzeichnet, dass** eine um den Zapfen (31) jeder Hubrolle (32) drehbare Arretierung (48) mit einer an ihrem einen Ende angeordneten Abstandsrolle (49) vorgesehen ist, dass die Abstandsrolle (49) je Seite auf der entsprechenden Oberkante (50) der Seitenwand beim Hubvorgang abrollt, und dass bei Erreichen der vorgegebenen Hubhöhe (36) zwischen Hubtisch (11) und Abdeckung (9) die Abstandsrolle (49) in der Oberfläche (50) der entsprechenden Seitenwand (9) festgehalten wird.

13. Montagestrecke nach einem oder mehreren der Montagestreckenansprüche 2 bis 12, **dadurch gekennzeichnet, dass** in jeder Seitenwand (8) je Seite zwei federbelastete horizontal verlaufende hintereinander angeordnete Platten (50) vorgesehen sind, und dass nach Erreichen der vorgesehenen Hubhöhe (36) die Platten (52) die entsprechende Seitenwange (12) abstützen.

## Claims

1. Horizontally running assembly chain (1) having a series of movable supports, each of the supports being designed as a thrust platform (5) with a base frame (7) and a lifting table (11) and being provided with means which allow the lifting table (11) to be raised by the horizontal drive, **characterized in that** the means are designed as a lifting apparatus (61), the first part of which is present on the left-hand and right-hand sides of the lifting table, as seen in the conveying direction, and the other part of which is arranged in a stationary position on the left-hand and right-hand sides of the assembly chain and can be operatively connected to the first part, and **in that** there are guide pins (18) and guide slots (14) which guide the lifting table (11) with respect to the base frame (7) and lock it in the raised state independently of the drive.

2. Horizontally running assembly chain according to the preceding claim, **characterized in that** the supports are designed in such a way that vehicles (4) can be placed on them, the supports being guided over rails (3), and the supports (5) together with the vehicles (4) being raised while maintaining the horizontal orientation with respect to the horizontal,
and/or
**in that** a stationary wheel and disk drive (6) which acts on the longitudinal sides of the thrust platforms is provided,
and/or
**in that** downwardly facing side cheeks (12) are provided on the left-hand and right-hand sides of the lifting table (11), as seen in the conveying direction, **in that** the side cheeks (12) run parallel to the side walls (8) inside the latter, **in that** the side cheek (8) and side wall (9) which are positioned directly opposite one another on each side are designed as a lifting-guidance carrier pair (13), **in that** each side cheek (12) and each side wall (8) carry guide slots (14) in succession at intervals in the conveying direction or guide pins (18) in succession as lifting guides, **in that** each side wall (8) bears a cut-out (22), **in that** each side cheek (12), on its outer side in the region of the cut-out (22), carries a part of a lifting apparatus (61) which projects beyond the respective side wall (8), and **in that** the other part of the lifting apparatus (61) is arranged in a stationary position on the left-hand and right-hand sides next to the assembly chain (1), and **in that** the side walls (8) and the side cheeks (12), for each thrust platform (5), are designed such that they can be locked with respect to one another.

3. Assembly chain according to Claim 2, **characterized in that** if the guide slots (14a) are arranged in the side walls (8) of the base frame (7), the guide pins (18) are arranged in the lower region of the free end of the side cheeks (12), **in that** the guide slots (14) have a bend in their upper end region
or
**in that** if the guide slots (14) are arranged in the side cheeks (12) of the lifting table (11), the guide pins (18a) are arranged in the upper region of the free end of the side walls (8) of the base frame (7), **in that** the guide slots (14) adopt an angle of inclination with respect to the horizontal conveying direction, and
**in that** the guide slots (14), in their lower end region (29), have a further bend (30) in the direction of advance.

4. Assembly chain according to one or more of the preceding assembly chain claims, **characterized in that** for each outer side of the cheek, a lifting roll arranged rotatably on a journal (31) is arranged as part of the lifting apparatus (61), and **in that** a guide rail (34) of predetermined length, which is inclined with respect to the horizontal, is arranged on a supporting structure (87) as the other part of the lifting apparatus (61) in a stationary position on the left-hand and right-hand sides next to the assembly chain (1), and **in that** the lifting rolls (32) for each lifting table (11), on the left-hand and right-hand sides of its side cheeks (12), on account of the horizontally acting force fit, are operatively connected to the guide rails (34), and **in that** the operative connection is released at the end of the guide rails (34) by running off.

5. Assembly chain according to one or more of Claims 1-3, **characterized in that** one further guide rail (35) of predetermined length per side cheek (12), arranged at a distance from the guide cheek, is provided as part of the lifting apparatus (61), and **in that** a roll (63), which can rotate on a further journal, is arranged in a stationary position on a further supporting structure (91) to the left-hand and right-hand sides next to the assembly chain (1) as the other part of the lifting apparatus (61), and **in that** the further guide rails (35), on account of the horizontally acting force fit, are operatively connected to the roll (63), and the operative connection is released at the end of the further guide rails (35).

6. Assembly chain according to one or more of the assembly chain Claims 4 and 5, **characterized in that** the lift height (36) can be varied by lengthening the guide rails (34) or the further guide rails (35) or increasing the inclination for the same length of rail.

7. Assembly chain according to one or more of the assembly chain Claims 4 to 6, **characterized in that** the rising guide rails (34), which are arranged in a stationary position next to the assembly chain (1), at their lower ends are arranged with their upper running surface (37) in a plane which is at least the lifting-roll radius lower than the lifting-roll axes with respect to the lifting rolls (32) arranged on the side cheeks (12), **in that** the guide rails (34), in their upper end region, merge into a horizontally running rail piece (39), and **in that** at the end of the horizontal extent the guide rails (34), over a short section (40) as far as their end, run at a defined angle which deviates downwards from the horizontal.

8. Assembly chain according to one or more of the assembly chain Claims 4 to 7, **characterized in that** in each case one further guide rail of the same type is arranged above the rising guide rail (34), so that for each side of the assembly chain (1) a pair of rails forms a lifting-roll-guidance passage (41).

9. Assembly chain according to one or more of the assembly chain Claims 2 to 7, **characterized in that** the rising further guide rails (35), which are arranged on the left-hand and right-hand sides of the side cheeks (12), at their upper ends are arranged with their lower running surface (38) in a plane which is at least the further lifting-roll radius higher than the further roll axes with respect to the further lifting rolls (63) arranged in a stationary position next to the assembly chain, **in that** the further guide rails (35), in their lower end region, merge into a horizontally running further rail piece, and **in that** at the end of the horizontal extent the further guide rails (35), over a further short section as far as their end, run at a defined angle upwards, deviating from the horizontal.

10. Assembly chain according to the preceding assembly chain claim, **characterized in that** in each case one still further guide rail (43) of the same type is arranged below the rising further guide rail (35), and **in that** for each side cheek a pair of rails forms a roll-guidance passage.

11. Assembly chain according to one or more of the assembly chain Claims 2 to 10, **characterized in that** for each side cheek (12) an auxiliary supporting roll is provided at a distance from and downstream of the lifting roll (32), and **in that** there is in each case one supporting rail (44) which interacts with this auxiliary supporting roll and is arranged in a stationary position on the left-hand and right-hand sides of the assembly chain, and **in that** the supporting rail (44) runs in a vertical plane to the left-hand and right-hand sides outside the guide rail plane (34).

12. Assembly chain according to one or more of the assembly chain Claims 2 to 11, **characterized in that** a locking means (48), which can rotate about the journal (31) of each lifting roll (32), having a spacer roll (49) arranged at one of its ends, is provided, **in that** the spacer roll (49), on each side, rolls along the corresponding upper edge (50) of the side wall during the lifting operation, and **in that** when the predetermined lifting height (36) between lifting table (11) and cover (9) is reached, the spacer roll (49) is retained in the surface (50) of the corresponding side wall (9).

13. Assembly chain according to one or more of the assembly chain Claims 2 to 12, **characterized in that** in each side wall (8) on each side there are two spring-loaded, horizontally running plates (50) arranged one behind the other, and **in that** after the intended lifting height (36) has been reached, the plates (52) support the corresponding side cheek (12).

## Revendications

1. Voie de montage (1) orientée horizontalement, comportant une rangée de supports mobiles, les supports étant conçus chacun sous forme de plate-forme coulissante (5) avec un châssis de base (7) et un plateau de levage (11), et étant munis de moyens qui permettent de soulever le plateau de levage (11) par l'intermédiaire du mécanisme d'entraînement horizontal, **caractérisée en ce que** les moyens sont conçus sous forme de dispositif de levage (61) dont la première partie est disposée, par référence au sens de transport, à gauche et à droite du plateau de levage et dont l'autre partie est agencée de manière stationnaire à gauche et à droite de la voie de montage et peut être amenée en liaison active avec la première partie, et **en ce qu'**il est prévu des broches de guidage (18) et des fentes de guidage (14) qui guident le plateau de levage (11) par rapport au châssis de base (7) et le bloquent en position soulevée indépendamment du mécanisme d'entraînement.

2. Voie de montage orientée horizontalement selon la revendication précédente, **caractérisée en ce que** les supports sont réalisés de telle sorte que des véhicules (4) peuvent être déposés sur ceux-ci, les supports étant guidés sur des rails (3) et les supports (5) avec les véhicules (4) pouvant être soulevés tout en maintenant l'orientation horizontale par rapport à l'horizontale,
et/ou
**en ce qu'**il est prévu des entraînements par friction (6) stationnaires, qui entrent en contact avec les côtés longitudinaux des plates-formes coulissantes,
et/ou
**en ce que** des joues latérales (12) orientées vers le bas sont prévues, par référence au sens de transport, à gauche et à droite du plateau de levage (11), **en ce que** les joues latérales (12) sont disposées parallèlement aux parois latérales (8) à l'intérieur de celles-ci, **en ce que** la joue latérale (12) et la paroi latérale (8), directement face à face sur chaque côté, sont conçues pour former une paire de supports de guidage du mouvement de levage (13), **en ce que** chaque joue latérale (12) et chaque paroi latérale (8) comporte des fentes de guidage (14), agencées à distance les unes derrière les autres dans le sens de transport, ou des broches de guidage (18) les unes derrière les autres pour former des guidages du mouvement de levage, **en ce que** chaque paroi latérale (8) comporte une découpe (22), **en ce que** chaque joue latérale (12) comporte sur sa face extérieure, dans la zone de la découpe (22), une partie d'un dispositif de levage (61), laquelle est en saillie au-delà de chaque paroi latérale (8), et **en ce que** l'autre partie du dispositif de levage (61) est agencée de manière stationnaire à gauche et à droite à côté de la voie de montage (1), et **en ce que** les parois latérales (8) et les joues latérales (12) de chaque plate-forme coulissante (5) sont conçus de manière à pouvoir être immobilisées les unes par rapport aux autres.

3. Voie de montage selon la revendication 2, **caractérisée en ce que**, lorsque les fentes de guidage (14a) sont réalisées dans les parois latérales (8) du châssis de base (7), les broches de guidage (18) sont agencées dans la partie inférieure de l'extrémité libre des joues latérales (12), **en ce que** les fentes de guidage (14) forment un coude dans leur zone d'extrémité supérieure,
ou
**en ce que**, lorsque les fentes de guidage (14) sont réalisées dans les joues latérales (12) du plateau de levage (11), les broches de guidage (18) sont agencées dans la partie supérieure de l'extrémité libre des parois latérales (8) du châssis de base (7), **en ce que** les fentes de guidage (14) sont disposées selon un angle d'inclinaison par rapport au sens de transport horizontal et **en ce que** les fentes de guidage (14) forment dans leur zone d'extrémité inférieure (29) un coude (30) supplémentaire dans le sens d'avance.

4. Voie de montage selon une ou plusieurs des revendications précédentes, **caractérisée en ce qu'**un rouleau de levage, monté rotatif sur un tourillon (31), sur le côté extérieur de chaque joue est conçu comme une partie du dispositif de levage (61), et **en ce qu'**un rail de guidage (34), incliné par rapport à l'horizontale et ayant une longueur prédéfinie, est agencé de manière stationnaire à gauche et à droite à côté de la voie de montage (1) pour former l'autre partie du dispositif de levage (61), et **en ce que** les rouleaux de levage (32) de chaque plateau de levage (11), à gauche et à droite des joues latérales (12) de ce dernier, entrent en liaison active avec les rails de guidage (34) sous l'effet d'un assemblage par frottement agissant dans le sens horizontal, et **en ce que** la liaison active est supprimée au niveau de l'extrémité des rails de guidage (34) sous l'effet de la sortie de voie.

5. Voie de montage selon une ou plusieurs des revendications 1 à 3, **caractérisée en ce qu'**un rail de guidage supplémentaire (35) pour chaque joue latérale (12), agencé à distance de celle-ci et ayant une longueur prédéfinie, est prévu pour former une partie du dispositif de levage (61) et **en ce qu'**un rouleau (63), monté rotatif sur un tourillon supplémentaire, est agencé de manière stationnaire sur une autre construction de support (91), à gauche et à droite à côté de la voie de montage (1) pour former l'autre partie du dispositif de levage (61), et **en ce que** des rails de guidage supplémentaires (35) entrent en liaison active avec les rouleaux (63) sous l'effet d'un assemblage par frottement agissant dans le sens horizontal et la liaison active est supprimée au niveau de l'extrémité des rails de guidage supplémentaires (35).

6. Voie de montage selon une ou plusieurs des revendications 4 et 5, **caractérisée en ce que** le prolongement des rails de guidage (34) ou des rails de guidage supplémentaires (35) ou l'augmentation de l'inclinaison avec la même longueur de rail permettent de faire varier la hauteur de levage (36).

7. Voie de montage selon une ou plusieurs des revendications 4 à 6, **caractérisée en ce que** les rails de guidage (34) à pente ascendante, agencés de manière stationnaire à côté de la voie de montage (1), sont agencés au niveau de leurs extrémités inférieures, avec leur surface de roulement supérieure (37) face aux rouleaux de levage (32) agencés sur les joues latérales (12), sont disposés dans un plan qui est plus bas que les axes des rouleaux de levage selon une valeur au moins égale au rayon des rouleaux de guidage, **en ce que** les rails de guidage (34) se prolongent dans leur zone d'extrémité supérieure par un tronçon de rail (39) horizontal et **en ce que**, à la fin du tronçon horizontal, les rails de guidage (34) s'étendent sur un court tronçon (40) jusqu'à leur extrémité en formant un angle déterminé vers le bas, en s'écartant de l'horizontale.

8. Voie de montage selon une ou plusieurs des revendications 4 à 7, **caractérisée en ce qu'**un rail de guidage supplémentaire de même type est agencé au-dessus de chaque rail de guidage (34) à pente ascendante de telle sorte que, sur chaque côté de la voie de montage (1), une paire de rails forme un conduit de guidage (41) pour les rouleaux de levage.

9. Voie de montage selon une ou plusieurs des revendications 2 à 7, **caractérisée en ce que** les rails de guidage supplémentaires (35) à pente ascendante, agencés à gauche et à droite sur les joues latérales (12), sont agencés au niveau de leurs extrémités supérieures, avec leur surface de roulement inférieure (38) face aux rouleaux de levage supplémentaires (63), agencés de manière stationnaire à côté de la voie de montage (1), sont disposés dans un plan qui est plus haut que les axes des rouleaux supplémentaires selon une valeur égale au rayon des rouleaux de guidage supplémentaires, **en ce que** les rails de guidage supplémentaires (35) se prolongent dans leur zone d'extrémité inférieure par un tronçon de rail supplémentaire horizontal et **en ce que**, à la fin du tronçon horizontal, les rails de guidage supplémentaires (35) s'étendent sur un court tronçon jusqu'à leur extrémité en formant un angle déterminé vers le haut, en s'écartant de l'horizontale.

10. Voie de montage selon la revendication précédente, **caractérisée en ce qu'**un autre rail de guidage supplémentaire (43) de même type est agencé au-dessous de chaque rail de guidage supplémentaire (35) à pente ascendante, et **en ce que**, sur chaque joue latérale, une paire de rails forme un conduit de guidage pour les rouleaux.

11. Voie de montage selon une ou plusieurs des revendications 2 à 10, **caractérisée en ce que**, à distance du rouleau de levage (32) et en aval de celui-ci, il est prévu un rouleau de support auxiliaire sur chaque joue latérale (12), et **en ce qu'**il est prévu respectivement un rail de support (44), coopérant avec ledit rouleau auxiliaire et agencé de manière stationnaire à gauche et à droite de la voie de montage, et **en ce que** le rail de support (44) s'étend dans un plan vertical à gauche et à droite en dehors du plan des rails de guidage (34).

12. Voie de montage selon une ou plusieurs des revendications 2 à 11, **caractérisée en ce qu'**il est prévu un organe d'arrêt (48), monté rotatif autour du tourillon (31) de chaque rouleau de levage (32) et comportant un rouleau d'écartement (49), agencé sur une des extrémités dudit organe d'arrêt, **en ce que**, à chaque processus de levage, le rouleau d'écartement (49) roule sur chaque côté sur le bord supérieur (50) correspondant de la paroi latérale, et **en ce que** le rouleau d'écartement (49) est retenu dans la surface (50) de la paroi latérale (8) correspondante lorsque la hauteur de levage (36) prédéfinie est atteinte entre le plateau de levage (11) et la paroi supérieure (9).

13. Voie de montage selon une ou plusieurs des revendications 2 à 12, **caractérisée en ce que**, sur chaque paroi latérale (8) de chaque côté, il est prévu deux plateaux (52) sollicités par ressort et agencés horizontalement l'un derrière l'autre, et **en ce que** les plateaux (52) supportent la joue latérale (12) correspondante lorsque la hauteur de levage (36) prédéfinie est atteinte.
